# EUROPÄISCHE PATENTSCHRIFT

(11) **EP 2 669 408 B1**
(45) Veröffentlichungstag und Bekanntmachung des Hinweises auf die Patenterteilung: **30.05.2018**
(21) Anmeldenummer: 13169957.1
(22) Anmeldetag: 31.05.2013
(51) Int. Cl.: C25F 3/24, F28F 13/18, F28D 9/00

(54) **Verfahren zum Herstellen eines Abgaswärmetauschers**
Method for producing an exhaust gas heat exchanger
Procédé destiné à la fabrication d'un échangeur de chaleur des gaz de combustion

(30) Priorität: 31.05.2012 DE 102012104707
(43) Veröffentlichungstag der Anmeldung: 04.12.2013
(73) Patentinhaber: Benteler Automobiltechnik GmbH, 33102 Paderborn (DE)
(72) Erfinder: Andres, Thorsten, 33106 Paderborn (DE); Aul, Eugen, 31787 Hameln (DE); Fricke, Fabian, 33102 Paderborn (DE); Müller, Sebastian, 34439 Willebadessen-Peckelsheim (DE); Vösgen, Rainer, 33154 Salzkotten (DE)
(74) Vertreter: Griepenstroh, Jörg

(56) Entgegenhaltungen:
- US-A1- 2006 108 234
- US-B2- 8 037 928
- DATABASE WPI Week 201141 Thomson Scientific, London, GB; AN 2011-G81302 XP002756527, -& WO 2011/070786 A1 (ESTIR CO LTD) 16. Juni 2011 (2011-06-16)
- DATABASE WPI Week 201156 Thomson Scientific, London, GB; AN 2011-K52085 XP002756528, & JP 2011 157589 A (MARUYASU IND CO LTD) 18. August 2011 (2011-08-18)

## Beschreibung

Die vorliegende Erfindung betrifft ein Verfahren zum Herstellen eines Abgaswärmetauschers eines Kraftfahrzeugs gemäß den Merkmalen im Oberbegriff von Patentanspruch 1.

Die vorliegende Erfindung betrifft weiterhin einen Abgaswärmetauscher für ein Kraftfahrzeug gemäß den Merkmalen im Oberbegriff von Patentanspruch 10.

Zur Herstellung von Abgaswärmetauschern werden insbesondere korrosionsbeständige metallische Werkstoffe eingesetzt. Hierbei handelt es sich insbesondere um Edelstähle, die nicht rostende Eigenschaften besitzen und sogleich den zu erwartenden Abgastemperaturen von mitunter bis zu mehr als 1.000° C langjährig standhalten, so dass ein daraus hergestellter Abgaswärmetauscher keine Verschleißerscheinungen aufzeigt.

Heutzutage werden hohe Anforderungen an die Reduzierung der Umweltbelastungen von Verbrennungskraftmaschinen, insbesondere bei Kraftfahrzeugen, gesetzt. Hierzu werden insbesondere zur Verminderung der im Abgas enthaltenen Stickoxide die aus der Verbrennungskraftmaschine ausgeführten Abgase wiederum dem Verbrennungsprozess nochmals zugeführt, um so durch den höheren Inertgasanteil die Verbrennungstemperatur und somit die Stickoxidemission zu senken. Im rückgeführten Abgas befinden sich Partikel, die sich an den Innenwänden der abgasführenden Leitungen, somit auch der Abgaswärmetauscher, ablagern. Dieser Prozess wird auch als Versottung bezeichnet.

Durch die Ablagerung der Partikel an den Innenflächen der abgasführenden Leitungen und auch insbesondere der Kanäle des Abgaswärmetauschers steigt der Abgasgegendruck. Zum einen werden die zur Strömung zur Verfügung stehenden Querschnitte verkleinert, zum anderen steigt der Strömungswiderstand an den Innenoberflächen, aufgrund der dort abgelagerten Partikel und der damit verbundenen Erhöhung der Oberflächenrauigkeit. Darüber hinaus führt eine zusätzliche Rußschicht zur Verschlechterung des Wärmeübergangs, was letztendlich höhere NOx-Emissionen nach sich zieht.

Um den Verschmutzungen, Verrußungen bzw. dem Versotten entgegenzuwirken, ist es aus dem Stand der Technik bekannt, die Innenflächen des Abgaswärmetauschers zu beschichten. Diese Beschichtungen werden beispielsweise mit Antihaft-Polituren oder Ähnlichem hergestellt. Ein solcher Beschichtungsvorgang weist jedoch insbesondere zwei Nachteile auf, zum einen steigen die Produktionskosten, zum anderen lässt die damit verbundene Verbesserung der Oberfläche während des Gebrauchs des Abgaswärmetauschers nach. So kommt es beispielsweise zu einem Abtrag oder Schwinden der Beschichtung während der Einsatzdauer des so hergestellten Kraftfahrzeugwärmetauschers, da diese teilweise nicht temperaturfest ist.

Aus der WO11070786 A1 ist ein Herstellungsverfahren für einen Wärmetauscher eines Stirlingmotors bekannt. Aus der US 8,037,928 B1 ist ein Wärmetauscher zum Einsatz in der Petrochemie bekannt.

Aufgabe der vorliegenden Erfindung ist es daher, ein Verfahren bereitzustellen, mit dem es möglich ist, einen Abgaswärmetauscher herzustellen, der eine optimierte Oberfläche gegen Versottung aufweist, wobei gleichzeitig der durch den Wärmetauscher entstehende Abgasgegendruck gesenkt wird, der Wirkungsgrad des Wärmetauschers über der Lebensdauer möglichst konstant bleibt und der Abgaswärmetauscher besonders kostengünstig produzierbar ist.

Die zuvor genannte Aufgabe wird mit einem Verfahren zum Herstellen eines Abgaswärmetauschers eines Kraftfahrzeugs gemäß den Merkmalen im Patentanspruch 1 gelöst.

Der gegenständliche Teil der Aufgabe wird ferner durch einen Abgaswärmetauscher für ein Kraftfahrzeug gemäß den Merkmalen im Patentanspruch 10 gelöst.

Vorteilhafte Ausführungsvarianten der vorliegenden Erfindung sind Bestandteil der abhängigen Patentansprüche.

Das Verfahren zum Herstellen eines Abgaswärmetauschers eines Kraftfahrzeugs, wobei der Abgaswärmetauscher aus einer äußeren Hülle und in der Hülle angeordneten Leitungen ausgebildet ist, ist dadurch gekennzeichnet, dass zur Herstellung einer homogenen, insbesondere mikroskopisch glatten Oberfläche mindestens einzelne Baukomponenten des Abgaswärmetauschers durch ein elektrochemisches Abtragungsverfahren oberflächenbehandelt werden, wobei durch das elektrochemische Abtragungsverfahren eine gemittelte Rauhtiefe Rz kleiner 1,5µm an der Oberfläche erzeugt wird und dass das elektrochemische Abtragungsverfahren ein Plasmapolieren oder ein Elektropolieren ist.

Der erfindungsgemäße Abgaswärmetauscher wird insbesondere als Kassettenwärmetauscher hergestellt, mithin besteht dieser aus einer äußeren Hülle sowie die Hülle abschließenden Deckeln und in der Hülle angeordneten Leitungssystemen bzw. Kanälen. Die Kanäle selbst können beispielsweise durch Rohre bzw. Rohrbündel ausgebildet sein, aber auch durch aufeinander geschichtete Platten. In den Platten oder aber in den Rohren können dann wiederum ergänzend Turbolatoren und/oder Lamellenbleche eingesetzt sein, die entweder eine Strömungslenkungsfunktion und/oder eine Oberflächenvergrößerungsfunktion übernehmen.

Erfindungsgemäß sind mindestens einzelne der zuvor genannten Baukomponenten, vorzugsweise alle Baukomponenten durch ein elektrochemisches Abtragungsverfahren oberflächenbehandelt. Bei dem elektrochemischen Abtragungsverfahren handelt es sich um ein Plasmapolieren oder aber ein Elektropolieren. Hierdurch wird die Oberfläche der einzelnen Baukomponenten, insbesondere werden die abgasführenden Oberflächen, mit dem erfindungsgemäßen Verfahren behandelt. Diese Oberflächen werden derart homogenisiert, insbesondere geglättet, so dass die Möglichkeit eines Anhaftens von Rußpartikeln oder sonstigen Verschmutzungen wesentlich reduziert wird. Insbesondere werden die innenliegenden Oberflächen mittels dem elektrochemischen Abtragungsverfahren behandelt. Das Abtragungsverfahren ermöglicht einen geringeren Druckverlust innerhalb des Wärmetauschers, wobei eine optional nachträglich aufgebrachte Beschichtung die Versottung mindert und somit eine Barriere zwischen dem metallischen Werkstoff des Wärmetauschers sowie den zu leitenden Abgasen geschaffen wird.

In einer besonders bevorzugten Ausführungsvariante der vorliegenden Erfindung wird der Abgaswärmetauscher aus umgeformten Lamellenblechen ausgebildet. Mithin werden aus Blechplatinen einzelne Lamellenbleche geformt, was mit einem Umformverfahren, insbesondere einem Blechumformverfahren, beispielsweise in einer Blechpresse, geschieht. Die einzelnen Lamellenbleche weisen dann eine dreidimensional geformte Oberflächenstruktur auf, die aufgrund der Turbulenzerzeugung eines über die Lamellenbleche strömenden Mediums einen verbesserten Wärmeübergang realisieren. Hierzu werden zunächst die Lamellenbleche umformtechnisch aus der Blechplatine hergestellt und nach der Umformung dann mit dem elektrochemischen Abtragungsverfahren oberflächenbehandelt, insbesondere elektropoliert.

Die Dauer und/oder die Intensität des Elektropolierens werden dabei besonders bevorzugt in Abhängigkeit der bei der Umformung entstehenden Umformgrade gewählt. Unter Dauer ist die Zeit zu verstehen, mit der das jeweilige Bauteil, insbesondere das Lamellenblech, in dem Säurebad behandelt wird. Unter der Intensität ist zum einen die Wahl des Säurebades selber bzw. dazu gesetzter Additive sowie andererseits die angelegte Spannung während des Elektropolierens zu verstehen. Beide Faktoren, also Dauer und/oder Intensität, werden besonders bevorzugt in Abhängigkeit der Umformgrade gewählt. Durch die Umformung entstehen Risse bzw. Mikrorisse an der Oberfläche des insbesondere Blechwerkstoffes, wobei das Elektropolieren bevorzugt derart gewählt wird, dass die Oberfläche unter Berücksichtigung der maximal entstehenden Risse bis auf ein gewünschtes Maß abgetragen wird, so dass keine Risse oder aber Risse in zu vernachlässigender Weise in der Oberfläche vorhanden sind. Insbesondere wird das Elektropolieren derart durchgeführt, dass 70 %, besonders bevorzugt 80 % und insbesondere mehr als 90 % der von der Oberfläche sich zur Werkstückmitte hin erstreckenden Risslänge von der Oberfläche des Werkstückes abgetragen werden.

Weiterhin ist erfindungsgemäß vorgesehen, dass es unter Verwendung eines Additivs, insbesondere eines chemischen Additivs, in dem Säurebad realisiert wird, dass die Oberfläche des zu behandelnden Bauteils gleichmäßig abgetragen wird. Insbesondere wird die Oberfläche des dreidimensional geformten Bauteils gleichmäßig abgetragen. Die so hergestellten Lamellenbleche erfahren somit keine Schwächung an positiven oder negativen Ecken, weshalb eine hinreichende Festigkeit des Bauteils auch nach dem Elektropolieren vorhanden ist.

Weiterhin ist erfindungsgemäß vorgesehen, dass eine Baukomponente, insbesondere ein Lamellenblech, vor dem Elektropolieren umformtechnisch bearbeitet wird und nach dem Elektropolieren 85 % bis 99,8 % seines Ausgangsgewichtes aufweist. Insbesondere weist die Baukomponente 99 % bis 99,5 %, besonders bevorzugt 95 % bis 99 % und insbesondere 97 % bis 99 % ihres Ausgangsgewichtes nach dem Elektropolieren auf. Hierdurch kann, bezogen auf die zu erwartenden Umformgrade und die sich dabei einstellenden mechanischen Oberflächeneigenschaften, ein Rückschluss auf die abgetragene Oberfläche und die dadurch erreichte Oberflächenqualität nach dem Elektropolieren erfolgen.

Weiterhin wird durch das elektrochemische Abtragungsverfahren, insbesondere durch das Elektropolieren, eine gemittelte Rauhtiefe Rz kleiner 1,5 µm an der Oberfläche erzeugt. Alternativ oder ergänzend wird eine Oberflächenspannung zwischen 30 und 40 mN/m, insbesondere 36 bis 38 mN/m erzeugt. Eine derart hergestellte Oberflächeneigenschaft hat sich erfindungsgemäß als besonders vorteilig herausgestellt, insbesondere mit Hinblick auf einen guten Wärmeübergang, eine optimal ausführbare optionale Beschichtung der Oberfläche sowie für einen Lötvorgang zur Koppelung der einzelnen Baukomponenten, insbesondere der einzelnen Lamellenbleche miteinander.

Die Oberfläche weist insbesondere eine auf die im Verbrennungsprozess von Verbrennungskraftmaschinen, insbesondere Ottomotoren und/oder Dieselmotoren entstehenden Partikel optimierte Oberfläche auf, so dass diese nicht an der Oberfläche anhaften. Die Oberflächenrauheit wird dabei durch das elektrochemische Abtragungsverfahren verringert, weshalb dieses auch als elektrochemisches Glätten zu bezeichnen ist. Das Verfahren senkt dabei die Mikrorauheit der metallischen Oberfläche. Dabei werden Rauheitsspitzen schneller abgetragen als Rauheitstäler. Insgesamt erfolgt jedoch eine Feinstentgratung, auch der die Rauheitstäler berandenden Bereiche, weshalb es den abgasströmenden Partikeln erschwert wird, sich an der abgasführenden Oberfläche des Abgaswärmetauschers festzusetzen. Weiterhin können bereits angehaftete Partikel durch die geringeren Haftkräfte bei höheren Massenströmen wieder abgetragen werden.

Im Rahmen der Erfindung ist es dann ferner möglich, im Falle von Rohren die Rohrleitung, im Falle von Wellblechen die Wellenbleche oder im Falle eines gesamten Wärmetauschers den gesamten Wärmetauscher beispielsweise in Form einer Wärmetauscherkassette mit den erfindungsgemäßen elektrochemischen Abtragungsverfahren zu behandeln. Somit wird beispielsweise die gesamte Abgaswärmetauscherkassette elektropoliert.

Hierzu werden die mit dem elektrochemischen Abtragungsverfahren zu behandelnden Bauteile zunächst vorbehandelt, insbesondere gereinigt und entfettet, ganz besonders bevorzugt werden die Bauteile chemisch vorbehandelt und anschließend in einem Tauchbad mit dem elektrochemischen Abtragungsverfahren weiterbehandelt. Das Tauchbad selber ist dabei insbesondere ein Säurebad, ganz besonders ein Phosphorgemischsäurebad und/oder ein Schwefelgemischsäurebad, in das die zu behandelnden Bauteile eingetaucht werden. Durch Anlegen einer Spannung, vorzugsweise zwischen 3 und 15 V an das Bauteil als Anode sowie einer weiterhin im Tauchbad befindlichen Kathode, insbesondere mehreren Kathoden, erfolgt dann ein entsprechender Poliervorgang bzw. Oberflächenabtrag, der zu dem Elektropolieren führt.

Es werden auf elektrolytischem Wege Metallionen auf der Oberfläche der zu behandelnden Bauteile abgetragen.

Im Rahmen der Erfindung ist es auch möglich, das Bauteil nicht nur durch Elektropolieren, sondern auch durch ein Plasmapolieren durchzuführen. Beim Plasmapolieren ist es möglich, die Bauteile in ein Tauchbad, bestehend aus einem Salzlösungsgemisch einzusetzen, wobei eine deutlich höhere Spannung im Gegensatz zu dem Elektropolieren eingesetzt wird. Hierdurch wird ein Plasmafilm um das Werkstück geführt, der wiederum zu einem Abtrag der Metallionen und somit zu einem Glätten der Oberfläche führt. Hierbei wird durch die lokale Gasentwicklung des Elektrolyts an einer kleinen Elektrode ein Gasstrom erzeugt, der die gesamte Oberfläche des Werkstücks überzieht und dadurch die Bildung einer Plasmahaut erlaubt. Hierdurch werden sowohl Mikrorauheiten eingeebnet und entgratet sowie organische und anorganische Verunreinigungen der Oberfläche entfernt. Bei dem Plasmapolieren kann eine vorbereitende intensive Reinigung des Bauteils entfallen, wodurch ein Vorbehandlungsschritt entfällt und hierdurch die Produktionskosten sinken.

Ferner wird an der jeweils behandelten Oberfläche eine gemittelte Rauhtiefe Rz kleiner als 1,5 µm hergestellt. Insbesondere werden Werkstoffe aus der nachfolgenden Gruppe eingesetzt, um mittels dem erfindungsgemäßen elektrochemischen Abtragungsverfahren behandelt zu werden: 1.4301, 1.4306, 1.4307, 1.4521, 1.4509, 1.4401, 1.4404.

Im Rahmen der Erfindung ist es weiterhin vorstellbar, dass ergänzend zu der geglätteten Oberfläche der Abgaswärmetauscher nach dem elektrochemischen Abtragungsverfahren weiter beschichtet wird. Insbesondere werden die abgasführenden Innenflächen beschichtet. Hierzu ist es beispielsweise möglich, die behandelten Oberflächen mit einer keramischen Beschichtung oder aber auch mit einer Gelbeschichtung zu versehen, die dann in die Oberflächen eingebrannt wird. Weiterhin besonders bevorzugt wird eine glaskeramische Beschichtung aufgebracht, insbesondere eine Siliziumoxidschicht.

Die Beschichtung hindert das Abgas bzw. im Abgas enthaltene Partikel an der Oberfläche zu versotten. Aufgrund der stark verminderten Versottung bzw. gar auszuschließenden Versottung ist es somit erfindungsgemäß möglich, dass im Betrieb des so hergestellten Kraftfahrzeugwärmetauschers, insbesondere im Langzeitbetrieb, ein hoher Wärmeübergang sichergestellt wird.

Die einzelnen Bauteile werden weiterhin besonders bevorzugt nach dem Elektropolieren miteinander verlötet, wobei das Verlöten insbesondere als Schutzgaslöten oder aber Vakuumlöten ausgeführt wird. Das Schutzgaslöten wird dabei insbesondere unter einer 100 %-igen H2-Atmosphäre durchgeführt bei einem Taupunkt von im Wesentlichen -40° C. Die Löttemperatur selbst beträgt dabei 980° C bis 1.100° C. Ein besonderer Vorteil ist, dass sauerstoffaffine Bestandteile des Grundwerkstoffes hierbei nicht oxidieren, so dass eine optionale Auftragung einer Beschichtung nach dem Schutzgaslötvorgang ermöglicht wird.

Alternativ dazu ist es möglich, dass ein Hochvakuumlöten von 10⁻³ bis 10⁻⁷ mbar durchgeführt wird, ebenfalls bei einer Löttemperatur zwischen 980° C bis 1.100° C. Entsprechende Vorteile bezüglich einer Oxidation der Bestandteile des Grundwerkstoffes gelten auch für das Vakuumlöten entsprechend.

Die vorliegende Erfindung betrifft weiterhin einen Abgaswärmetauscher für ein Kraftfahrzeug, aufweisend eine äußere Hülle und in der Hülle angeordnete Leitungen, insbesondere hergestellt nach einem Verfahren gemäß der voran beschriebenen Merkmalen, wobei der Abgaswärmetauscher dadurch gekennzeichnet ist, dass mindestens die abgasführenden Oberflächen mit einem elektrochemischen Abtragungsverfahren, insbesondere durch Elektropolieren, oberflächenbehandelt sind.

Insbesondere ist der erfindungsgemäße Abgaswärmetauscher aus einem Edelstahl, ganz besonders bevorzugt aus einem Werkstoff 1.4301, ausgebildet. Insbesondere sind im Rahmen der Erfindung mindestens die abgasführenden Oberflächen durch das elektromechanische Abtragungsverfahren derart geglättet bzw. poliert, dass die während des Betriebs der Verbrennungskraftmaschine durch den Abgaswärmetauscher strömenden Partikel nicht an der Oberfläche anhaften oder aber deren Anhaftung erschwert wird. Insbesondere hat eine Abtragung der Oberflächenspitzen an der zu behandelnden Oberfläche stattgefunden, bevorzugt eine Entgratung der Oberflächenkrater. Vorzugsweise ist der gesamte Abgaswärmetauscher mit dem elektrochemischen Abtragungsverfahren behandelt.

Weitere Vorteile, Merkmale, Eigenschaften und Aspekte der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1: eine perspektivische Ansicht auf ein erfindungsgemäß hergestelltes Lamellenblech für einen Abgaswärmetauscher;
- Figur 2: ein Lamellenblech in Detailansicht und
- Figur 3a und b: einen Oberflächenabtrag mittels Elektropolieren.

In den Figuren werden für gleiche oder ähnliche Bauteile dieselben Bezugszeichen verwendet, auch wenn eine widerholte Beschreibung aus Vereinfachungsgründen entfällt.

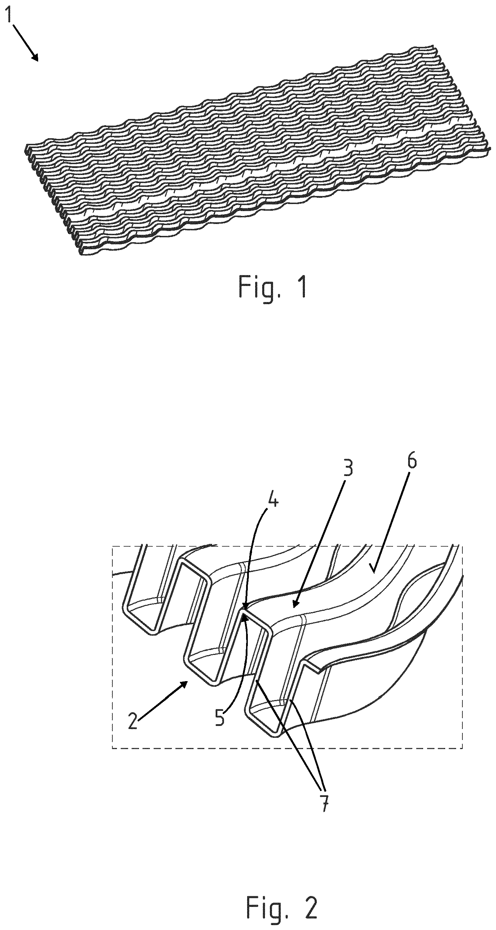

Figur 1 zeigt ein erfindungsgemäßes Lamellenblech 1. Für eine Wärmetauscherkassette, die anschließend in einen Abgaswärmetauscher eingeschoben wird, werden bevorzugt mehrere Lamellenbleche 1 zunächst getrennt voneinander umformtechnisch und mittels Elektropolieren hergestellt und dann übereinander gesetzt und miteinander verlötet.

Figur 2 zeigt eine perspektivische Detailansicht des Lamellenbleches 1, wobei gut zu erkennen sind Wellentäler 2 und Wellenberge 3. Zwischen den Wellentälern 2 und Wellenbergen 3 sind dann positive Ecken 4 sowie negative Ecken 5 ausgebildet, wobei durch das erfindungsgemäße Elektropolieren ein gleichmäßiger Abtrag an der gesamten Oberfläche 6 des Lamellenbleches 1 erfolgt. Mithin werden die Bereiche der Wellentäler 2 oder Wellenberge 3 sowie der dazwischen befindlichen Stege 7 und auch der positiven oder aber negativen Ecken 4, 5 nicht unterschiedlich stark abgetragen. Es erfolgt vielmehr ein gleichmäßiger Abtrag der Oberfläche 6.

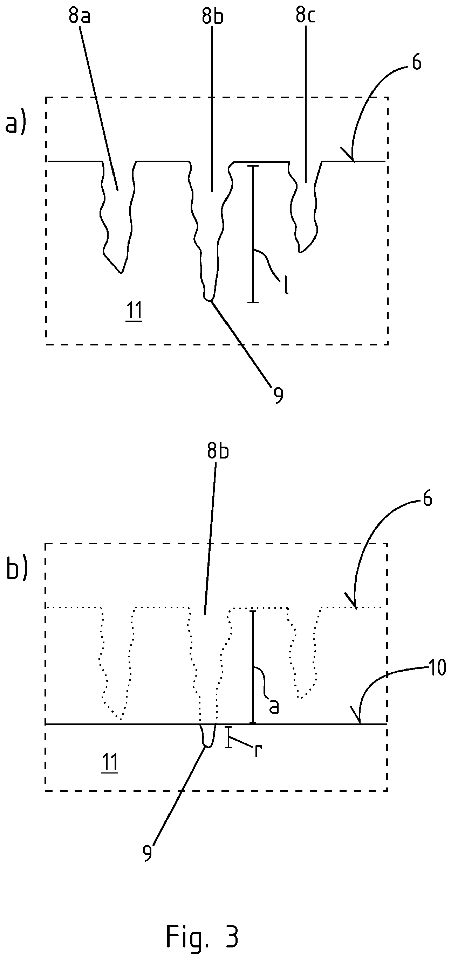

Figur 3a und 3b zeigen die umformtechnisch bearbeitete Oberfläche 6 vor dem Elektropolieren (Figur 3a) und nach dem Elektropolieren (Figur 3b). Gemäß Figur 3a ist zu erkennen, dass sich an der Oberfläche 6 Mikrorisse bzw. Risse 8a, 8b, 8c gebildet haben aufgrund der Einwirkungen des Umformverfahrens. Durch das auf das Umformverfahren folgende erfindungsgemäße Elektropolieren wird nunmehr die Oberfläche 6 abgetragen um ein Maß a. Nur noch der mittlere Riss 8b ist mit seiner Spitze 9 in der abgetragenen Oberfläche 10 vorhanden. Die Risse 8a und 8c werden durch das Elektropolieren vollends entfernt. Das Maß für die Oberflächenabtragung a beträgt dabei circa in dem Beispiel aus Figur 3 90 % der Länge I des längsten sich von der Oberfläche 6 erstreckenden Risses 8b. Mithin verbleibt eine Länge der Rissspitze r, die sich von der Oberfläche 10 nach dem Elektropolieren in Richtung zur Bauteilmitte 11 erstreckt. Dies entspricht jedoch der gewünschten Oberflächenqualität, insbesondere mit einer gemittelten Rauhtiefe Rz kleiner 1,5 µm.

### Bezugszeichen:

- 1 -: Lamellenblech
- 2-: Wellental
- 3 -: Wellenberg
- 4 -: positive Ecke
- 5 -: negative Ecke
- 6 -: Oberfläche
- 7 -: Steg
- 8a -: Riss
- 8b -: mittlerer Riss
- 8c -: Riss
- 9 -: Spitze
- 10 -: Oberfläche
- 11 -: Bauteilmitte

- a -: Maß Oberflächenabtragung
- l -: Länge
- r -: Länge Rissspitze

## Patentansprüche

1. Verfahren zum Herstellen eines Abgaswärmetauschers eines Kraftfahrzeuges, wobei der Abgaswärmetauscher aus einer äußeren Hülle und in der Hülle angeordneten Leitungen ausgebildet ist, **dadurch gekennzeichnet, dass** zur Herstellung einer homogenen, insbesondere glatten Oberfläche (6) mindestens einzelne Baukomponenten des Abgaswärmetauschers durch ein elektrochemisches Abtragungsverfahren oberflächenbehandelt werden, wobei durch das elektrochemische Abtragungsverfahren eine gemittelte Rauhtiefe Rz kleiner 1,5µm an der Oberfläche (6) erzeugt wird und dass das elektrochemische Abtragungsverfahren ein Plasmapolieren oder ein Elektropolieren ist.

2. Verfahren nach Anspruch 1, **dadurch gekennzeichnet, dass** einzelne Rohrleitungen für den Abgaswärmetauscher elektropoliert werden, insbesondere werden die abgasführenden Oberflächen (6) elektropoliert und/oder dass die Hülle elektropoliert wird oder dass der gesamte Abgaswärmetauscher elektropoliert wird.

3. Verfahren nach einem der Ansprüche 1 oder 2, **dadurch gekennzeichnet, dass** die Bauteile, die elektropoliert werden als Anode eingesetzt werden, insbesondere werden die einzelnen Bauteile oder der gesamte Abgaswärmetauscher in ein Säurebad getaucht.

4. Verfahren nach einem der Ansprüche 1 bis 3, **dadurch gekennzeichnet, dass** der Abgaswärmetauscher aus umgeformten Lamellenblechen (1) ausgebildet wird, wobei die Lamellenbleche (1) zuerst umformtechnisch bearbeitet werden und nach der Umformung elektropoliert werden.

5. Verfahren nach einem der Ansprüche 1 bis 4, **dadurch gekennzeichnet, dass** bei dem Elektropolieren die Oberfläche (6) des zu behandelnden Bauteils gleichmäßig abgetragen wird, insbesondere unter Verwendung eines Additivs in dem Säurebad.

6. Verfahren nach einem der Ansprüche 1 bis 5, **dadurch gekennzeichnet, dass** eine Baukomponente, insbesondere ein Lamellenblech (1), vor dem Elektropolieren gewogen wird und nach dem Elektropolieren 85 bis 99,8% seines Ausgangsgewichtes aufweist, insbesondere 90 bis 99,5%, bevorzugt 95 bis 99%.

7. Verfahren nach einem der Ansprüche 1 bis 6, **dadurch gekennzeichnet, dass** eine Oberflächenspannung zwischen 30 und 40 mN/m, insbesondere 36 bis 38 mN/m erzeugt wird.

8. Verfahren nach einem der Ansprüche 1 bis 7, **dadurch gekennzeichnet, dass** die Baukomponenten nach dem Elektropolieren beschichtet werden, insbesondere mit einer Antihaftbeschichtung, ganz besonders bevorzugt mit einer glaskeramischen Beschichtung.

9. Verfahren nach einem der Ansprüche 1 bis 8, **dadurch gekennzeichnet, dass** die Baukomponenten, insbesondere die Lamellenbleche (1) nach dem Elektropolieren verlötet werden, insbesondere durch Schutzgaslöten oder Vakuumlöten.

10. Abgaswärmetauscher für ein Kraftfahrzeug, aufweisend eine äußere Hülle und in der Hülle angeordnete Leitungen, hergestellt nach einem Verfahren nach Anspruch 1, **dadurch gekennzeichnet, dass** mindestens die abgasführenden Oberflächen (6) mit einem elektrochemischen Abtragungsverfahren, insbesondere durch Elektropolieren, oberflächenbehandelt sind.

## Claims

1. Method for producing an exhaust gas heat exchanger of a motor vehicle, wherein the exhaust gas heat exchanger consists of an outer jacket and ducts arranged in the outer jacket, **characterised in that** at least individual structural components of the exhaust gas heat exchanger are surface-treated by an electrochemical stripping process to produce a homogeneous, in particular smooth surface (6), wherein a mean roughness depth Rz of less than 1.5 µm is generated on the surface (6) by the electrochemical stripping process and wherein the electrochemical stripping process is a plasma-polishing or an electro-polishing process.

2. Method according to claim 1, **characterised in that** individual pipelines for the exhaust gas heat exchanger are electro-polished, in particular the surfaces (6) carrying the exhaust gas are electro-polished and/or that the jacket is electro-polished or that the entire exhaust gas heat exchanger is electro-polished.

3. Method according to any of claims 1 or 2, **characterised in that** the components which are electro-polished are used as an anode, in particular the individual components or the entire exhaust gas heat exchanger are immersed in an acid bath.

4. Method according to any of claims 1 to 3, **characterised in that** the exhaust gas heat exchanger consists of formed lamellar sheets (1), wherein the lamellar sheets (1) are first processed by forming techniques and electro-polished after the forming.

5. Method according to any of claims 1 to 4, **characterised in that** during the electro-polishing, the surface (6) of the component to be treated is evenly stripped, in particular using an additive in the acid bath.

6. Method according to any of claims 1 to 5, **characterised in that** a structural component, in particular a lamellar sheet (1), is weighed before the electro-polishing and after the electro-polishing has as a weight which is 85 to 99.8% of its starting weight, in particular 90 to 99.5%, preferably 95 to 99%.

7. Method according to any of claims 1 to 6, **characterised in that** a surface tension of between 30 and 40 mN/m, in particular 36 to 38 mN/m, is generated.

8. Method according to any of claims 1 to 7, **characterised in that** the components are coated after the electro-polishing, in particular with a non-stick coating, particularly preferably with a glass-ceramic coating.

9. Method according to any of claims 1 to 8, **characterised in that** the structural components, in particular the lamellar sheets (1), are soldered after the electro-polishing, in particular by inert gas soldering or vacuum soldering.

10. Exhaust gas heat exchanger for a motor vehicle, comprising an outer jacket and ducts arranged in the jacket, produced according to a method according to claim 1, **characterised in that** at least the surfaces (6) carrying the exhaust gas are surface-treated using an electrochemical stripping process, in particular by electro-polishing.

## Revendications

1. Procédé de fabrication d'un échangeur de chaleur de gaz d'échappement d'un véhicule automobile, l'échangeur de chaleur de gaz d'échappement étant constitué d'une enveloppe extérieure et de conduites agencées dans l'enveloppe, **caractérisé en ce que**, en vue de la fabrication d'une surface (6) homogène, en particulier lisse, au moins des composants individuels de l'échangeur de chaleur de gaz d'échappement sont soumis à un traitement de surface avec un procédé d'abrasion électrochimique, procédé d'abrasion électrochimique par lequel on produit une profondeur de rugosité moyenne Rz inférieure à 1,5 µm au niveau de la surface (6), et **en ce que** le procédé d'abrasion électrochimique est un polissage au plasma ou un polissage électrolytique.

2. Procédé selon la revendication 1, **caractérisé en ce que** des conduites tubulaires individuelles destinées à l'échangeur de chaleur de gaz d'échappement sont polies par électrolyse, en particulier les surfaces (6) conduisant les gaz d'échappement sont polies par électrolyse, et/ou **en ce que** l'enveloppe est polie par électrolyse ou **en ce que** tout l'échangeur de chaleur de gaz d'échappement est poli par électrolyse.

3. Procédé selon l'une quelconque des revendications 1 ou 2, **caractérisé en ce que** les composants qui sont polis par électrolyse sont utilisés comme anode, en particulier les composants individuels ou tout l'échangeur de chaleur de gaz d'échappement sont plongés dans un bain acide.

4. Procédé selon l'une quelconque des revendications 1 à 3, **caractérisé en ce que** l'échangeur de chaleur de gaz d'échappement est constitué de lamelles de tôle (1) formées, les lamelles de tôle (1) étant d'abord usinées par une technique de formage puis polies par électrolyse après le formage.

5. Procédé selon l'une quelconque des revendications 1 à 4, **caractérisé en ce que**, lors du polissage électrolytique, la surface (6) du composant à traiter est abrasée régulièrement, en particulier en utilisant un additif dans le bain acide.

6. Procédé selon l'une quelconque des revendications 1 à 5, **caractérisé en ce qu'**un composant, en particulier une lamelle de tôle (1), est pesé avant le polissage électrolytique et présente après le polissage électrolytique 85 à 99,8 % de son poids initial, en particulier 90 à 99,5 %, de préférence 95 à 99 %.

7. Procédé selon l'une quelconque des revendications 1 à 6, **caractérisé en ce qu'**on produit une tension superficielle entre 30 et 40 mN/m, en particulier entre 36 à 38 mM/m.

8. Procédé selon l'une quelconque des revendications 1 à 7, **caractérisé en ce que** les composants sont revêtus après le polissage électrolytique, en particulier avec un revêtement antiadhérent, de manière particulièrement préférée avec un revêtement vitrocéramique.

9. Procédé selon l'une quelconque des revendications 1 à 8, **caractérisé en ce que** les composants, en particulier les lamelles de tôle (1), sont brasés après le polissage électrolytique, en particulier brasés sous atmosphère protectrice ou brasés sous vide.

10. Échangeur de chaleur de gaz d'échappement pour un véhicule automobile, comportant une enveloppe extérieure et des conduites agencées dans l'enveloppe, fabriqué selon un procédé selon la revendication 1, **caractérisé en ce qu'**au moins les surfaces (6) conduisant les gaz d'échappement sont soumises à un traitement de surface avec un procédé d'abrasion électrochimique, en particulier par polissage électrolytique.
